# EUROPEAN PATENT APPLICATION

(11) **EP 2 573 143 A1**
(43) Date of publication of application: **27.03.2013**
(21) Application number: 11783484.6
(22) Date of filing: 16.05.2011
(51) Int. Cl.: C08L 101/00, B65D 65/02, B65D 81/26, C08J 7/00, C08K 3/10

(54) **OXYGEN-ABSORBABLE RESIN COMPOSITION, AND PROCESS FOR PRODUCTION OF PACKAGING MATERIAL USING SAME**

(30) Priority: 17.05.2010 JP 2010113166
(71) Applicant: Mitsubishi Gas Chemical Company, Inc., Tokyo 100-8324 (JP)
(72) Inventor: SUMITANI Makoto, Tokyo 125-8601 (JP); YOKOSE Emiko, Tokyo 125-8601 (JP); NAKAO Kimitaka, Tokyo 125-8601 (JP)
(74) Representative: HOFFMANN EITLE
(86) International application number: PCT/JP2011/061160
(87) International publication number: WO 2011/145550

(57) **Abstract**

The present invention provides an oxygen-absorbing resin composition that allows the miniaturization of an ultraviolet irradiation apparatus for initiating oxygen absorption, and rapidly initiates oxygen absorption by irradiation of an ultraviolet ray having a particular wavelength. The present invention is an oxygen-absorbing resin composition comprising an initiator, a transition metal catalyst, and an oxidizable resin, wherein the oxygen-absorbing resin composition initiates oxygen absorption by irradiation of an ultraviolet ray having a peak wavelength within the range of 300 to 400 nm.

## Description

### Technical Field

The present invention relates to an oxygen-absorbing resin composition which initiates oxygen absorption by irradiation with an ultraviolet ray having a particular wavelength. The oxygen-absorbing resin composition of the present invention can be used for the whole or a part of an oxygen absorber or an oxygen-absorbing container.

### Background Art

For the purpose of preventing various articles which are easily deteriorated or degraded due to the influence of oxygen, typified by foods, drinks, medicines, medical supplies, cosmetics, metallic products, and electronic products, from the oxidation by oxygen and storing them for a long period, oxygen scavengers for removing oxygen in packaging containers or packaging bags in which those articles are stored are used. The form of the oxygen scavengers which had been developed in an early development phase and is still often used, is that of an air-permeable sachet filled with an oxygen scavenger composed of an iron powder, ascorbic acid, or the like.

In recent years, film-shaped oxygen scavengers which are more easily handled, have a wide range of application, and have an extremely small possibility of being accidentally eaten have also been utilized. Regarding the film-shaped oxygen scavengers, many proposals have been made for their oxygen-absorbing compositions and film structures. For example, a basic oxygen scavenging multilayer body obtained by blending an oxygen scavenger composed of an iron powder, ascorbic acid, or the like into a resin, molding it into a film, a sheet, or the like, laminating an isolation layer having a heat sealability on one side, and laminating a gas barrier layer on the other side is known (Patent Document 1). In addition, a packaging film comprising a layer composed of an organic component or a resin component that can be oxidized, and a transition metal catalyst is also known (Patent Documents 2 and 3). Further, in order to suppress odors generated from an oxygen scavenger composed of an organic substance with its oxidation, it has been proposed to contain an adsorbent, such as zeolite, in an oxygen-absorbing composition, to provide an oxygen scavenging multilayer film in which a layer containing an adsorbent is laminated, or to provide an oxygen scavenging multilayer film in which a layer containing a base as a neutralizing agent is laminated (Patent Documents 4 to 6).

A film containing an iron powder as an oxygen scavenger initiates oxygen absorption with moisture as a trigger. On the other hand, a method of irradiating a film comprising an oxygen-absorbing resin composition, in which a catalyst and benzophenone as an initiator are blended with a oxidizable resin, with an ultraviolet ray having a wavelength of 200 to 280 nm (UV-C light) to initiate oxygen absorption is proposed (Patent Document 7).

### Citation List

### Patent Document

Patent Document 1: Japanese Patent Laid-Open No. 55-90535
Patent Document 2: Japanese Patent No. 2991437
Patent Document 3: Japanese Patent No. 3183704
Patent Document 4: Japanese Patent Laid-Open No. 05-247276
Patent Document 5: Japanese Patent Laid-Open No. 06-100042
Patent Document 6: Japanese Patent No. 3306071
Patent Document 7: Japanese Patent No. 3897364

### Summary of Invention

### Technical Problem

The present inventors have found the following problems with the method of irradiating UV-C light to initiate oxygen absorption.

First, mainly, an irradiation apparatus having an ultraviolet lamp, such as a low pressure mercury lamp, as a light source has been widely used so far. However, in irradiation from the ultraviolet lamp, toxic ozone is generated. In accordance with this, a local exhaust apparatus for removing ozone is required. In addition, since its heat generation is large, cooling equipment is also required. As a result, the irradiation apparatus is large-sized. Meanwhile, it is desired to conduct the ultraviolet irradiation on a packaging line in terms of labor saving. However, when irradiation is conducted by the ultraviolet lamp, it is necessary to install such a large-sized irradiation apparatus on a packaging line, and there are problems in terms of its footprint, maintenance cost, and the like.

It is an object of the present invention to provide an oxygen-absorbing resin composition that allows the miniaturization of an ultraviolet irradiation apparatus for initiating oxygen absorption, and rapidly initiates oxygen absorption by irradiation with an ultraviolet ray having a particular wavelength.

### Solution to Problem

The present inventors have studied diligently to solve the above problems, and, as a result, found that an ultraviolet irradiation apparatus for initiating oxygen absorption can be miniaturized, and oxygen absorption is rapidly initiated by irradiation with an ultraviolet ray having a particular wavelength, particularly by an ultraviolet irradiation from an irradiation apparatus having an ultraviolet LED as a light source, thereby arriving at the present invention.

Specifically, the present invention is an oxygen-absorbing resin composition comprising an initiator, a transition metal catalyst, and an oxidizable resin, which initiates oxygen absorption by irradiation of an ultraviolet ray having a peak wavelength within a range of 300 to 400 nm.

According to this oxygen-absorbing resin composition, an ultraviolet irradiation apparatus for initiating oxygen absorption can be miniaturized, and oxygen absorption can be rapidly initiated by irradiation of an ultraviolet ray having a peak wavelength within the range of 300 to 400 nm.

In addition, it is preferable that the ultraviolet irradiation is conducted using an irradiation apparatus having an ultraviolet LED as a light source.

An ultraviolet LED has the advantages of low power consumption, long life, small heat generation, small size, and narrow emission spectrum width (50 nm or less), compared with an ultraviolet lamp. In an irradiation apparatus having, as a light source, an ultraviolet LED that emits 315 to 380 nm ultraviolet rays (UV-A light), toxic ozone is not generated. Therefore, the irradiation apparatus having an ultraviolet LED as a light source does not require a local exhaust apparatus. In addition, in the irradiation apparatus having an ultraviolet LED as a light source, heat generation is small. Therefore, the irradiation apparatus having an ultraviolet LED as a light source does not require large cooling equipment, such as a chiller or a blower. Furthermore, in the irradiation apparatus having an ultraviolet LED as a light source, compared with an irradiation apparatus using an ultraviolet lamp, the thickness of the ultraviolet irradiation portion can be reduced, and the distance between a film and the light source can be shortened. Therefore, the miniaturization of the irradiation apparatus is possible. Further, in the irradiation apparatus having an ultraviolet LED as a light source, the maintenance cost can also be reduced in terms of low power consumption and long life.

It is preferable that the above oxygen-absorbing resin composition further comprises a sensitizer. This oxygen-absorbing resin composition can more rapidly initiate oxygen absorption than when not comprising the sensitizer.

The initiator is specifically a substance that is excited by irradiation with 300 to 400 nm ultraviolet ray or by energy transferred from the sensitizer excited by irradiation with 300 to 400 nm ultraviolet ray and becomes a starting point for initiating an oxidation reaction of the oxidizable resin.

It is preferable that the initiator is an aromatic ketone, and the sensitizer is a thioxanthones. In this case, oxygen absorption can be more efficiently initiated.

It is preferable that the above oxygen-absorbing resin composition comprises an accelerant. This oxygen-absorbing resin composition can more rapidly initiate oxygen absorption than when not comprising the accelerant. Particularly, it is preferable that the above oxygen-absorbing resin composition further comprises a sensitizer and an accelerant. In this case, oxygen absorption can be more rapidly initiated than when the above oxygen-absorbing resin composition does not comprise the sensitizer and the accelerant.

It is preferable that the accelerant is a polymer containing a phenyl group. In this case, since the accelerant has a phenyl group and its benzylic hydrogen is easily abstracted, the polymer becomes a radical easily. Therefore, oxygen absorption can be more rapidly initiated.
The polymer containing a phenyl group is, for example, a copolymer containing a constituent unit corresponding to styrene.

In addition, the present invention relates to an oxygen scavenging sheet or film containing an oxygen scavenging layer which comprises the above-described oxygen-absorbing resin composition.

Further, the present invention relates to a method for manufacturing a packaging body for packaging an article to be packaged, comprising an ultraviolet irradiation step of irradiating the above oxygen scavenging sheet or film with an ultraviolet ray having a peak wavelength within a range of 300 to 400 nm to initiate oxygen absorption in the oxygen-absorbing resin composition; and a packaging step of packaging the article to be packaged, in the sheet or film.

According to the above manufacturing method, since an ultraviolet ray having a peak wavelength within the range of 300 to 400 nm is irradiated to initiate oxygen absorption in the oxygen-absorbing resin composition, the generation of harmful ozone can be prevented. Therefore, the ultraviolet irradiation apparatus does not require a local exhaust apparatus. In addition, in the ultraviolet irradiation apparatus, heat generation is small. Therefore, large cooling equipment is not required. As a result, the equipment for manufacturing a packaging body can be miniaturized. In addition, oxygen absorption can be rapidly initiated by irradiation with an ultraviolet ray having a peak wavelength within the range of 300 to 400 nm.

In the above manufacturing method, it is preferable that the ultraviolet irradiation step is conducted before the packaging step. In this case, since the ultraviolet irradiation step is conducted before the packaging step, there is no possibility of damaging the article to be packaged, by the ultraviolet irradiation.

In the above manufacturing method, it is preferable that the ultraviolet irradiation step is conducted using an irradiation apparatus having an ultraviolet LED as a light source. An ultraviolet LED has the advantages of low power consumption, long life, small heat generation, small size, and narrow emission spectrum width (50 nm or less), compared with an ultraviolet lamp. In an irradiation apparatus having, as a light source, an ultraviolet LED that emits 315 to 380 nm ultraviolet rays (UV-A light), toxic ozone is not generated. Therefore, the irradiation apparatus having an ultraviolet LED as a light source does not require a local exhaust apparatus. In addition, in the irradiation apparatus having an ultraviolet LED as a light source, heat generation is small. Therefore, large cooling equipment, such as a chiller or a blower, is not required. Furthermore, in the irradiation apparatus having an ultraviolet LED as a light source, compared with an irradiation apparatus using an ultraviolet lamp, the thickness of the ultraviolet irradiation portion can be reduced, and the distance between a film and the light source can be shortened. Therefore, the miniaturization of the irradiation apparatus is possible. Further, in the irradiation apparatus having an ultraviolet LED as a light source, the maintenance cost can also be reduced in terms of low power consumption and long life. Further, in the irradiation apparatus, heat generation is smaller than in conventional ultraviolet lamps. Therefore, the temperature increase of the film is sufficiently suppressed, and there is no possibility of damaging the article to be packaged.

It is preferable that in the ultraviolet irradiation step, the sheet or film is irradiated with an ultraviolet ray having an illuminance of 2 mW/cm² or more.

In this case, oxygen absorption can be rapidly initiated by shorter-time ultraviolet irradiation than when the illuminance is outside the above range.

### Advantageous Effect of Invention

The present invention provides an oxygen-absorbing resin composition that allows the miniaturization of an ultraviolet irradiation apparatus for initiating oxygen absorption, and can rapidly initiate oxygen absorption by irradiation with an ultraviolet ray having a particular wavelength, and a method for manufacturing a packaging body using the oxygen-absorbing resin composition.

### Brief Description of Drawings

[Figure 1] Figure 1 is a cross-sectional view showing one embodiment of an oxygen scavenging sheet or film according to the present invention.
[Figure 2] Figure 2 is a cross-sectional view showing another embodiment of the oxygen scavenging sheet or film according to the present invention.
[Figure 3] Figure 3 is a cross-sectional view showing a further embodiment of the oxygen scavenging sheet or film according to the present invention.
[Figure 4] Figure 4 is a schematic view showing one step in one embodiment of a method for manufacturing a packaging body according to the present invention.
[Figure 5] Figure 5 is a partial cross-sectional view showing one step in another embodiment of the method for manufacturing a packaging body according to the present invention.

### Description of Embodiments

As used in this specification, "oxygen scavenging" means that the oxygen concentration in a hermetically-closed environment becomes 0.1 vol% or less, and an "oxygen scavenger" means an agent, a material, or the like used for the purpose of achieving a deoxidized state. In addition, "oxygen scavenging" is synonymous with "having a function as an oxygen scavenger." Further, "oxygen absorption" means that an agent, a material, or the like takes in oxygen in an environment regardless of oxygen concentration reached. In addition, "initiate oxygen absorption" means that the amount of oxygen absorbed 24 hours after irradiation with an ultraviolet ray becomes 1 mL/g or more.

For an oxidizable thermoplastic resin used in the oxygen-absorbing resin composition of the present invention, an organic polymer compound having a moiety in which carbon is bonded to carbon by a double bond, an organic polymer compound having a hydrogen atom bonded to a tertiary carbon atom, or an organic polymer compound having a phenyl group can be used. The carbon-carbon double bond in the organic polymer compound having a moiety in which carbon is bonded to carbon by a double bond may be present in the main chain or side chain of the polymer. Typical examples of the organic polymer compound include 1,4-polybutadiene, 1,2-polybutadiene, 1,4-polyisoprene, 3,4-polyisoprene, a styrene-butadiene rubber, a styrene-butadiene-styrene block copolymer, a styrene-isoprene-styrene block copolymer, and an ethylene/methyl acrylate/cyclohexenylmethyl acrylate copolymer. In addition, examples of the organic polymer compound having a hydrogen atom bonded to a tertiary carbon atom include polypropylene and polymethylpentene. Examples of the organic polymer compound having a phenyl group include a hydrogenated styrene-butadiene rubber and a hydrogenated styrene-isoprene rubber. Among these, an organic polymer compound having a moiety in which carbon is bonded to carbon by a double bond is preferable, and 1,2-polybutadiene is more preferable.

The transition metal catalyst of the present invention is a metal compound, such as a salt or oxide of a transition metal. As the transition metal, manganese, iron, cobalt, nickel, and copper are preferable, and manganese, iron, and cobalt are particularly preferable because they show an excellent catalytic action. Salts of transition metals include mineral acid salts and fatty acid salts of transition metals. Examples of mineral acid salts include hydrochlorides, sulfates, and nitrates of transition metals. Examples of fatty acid salts include acetates and higher fatty acid salts. Typical examples of higher fatty acid salts include cobalt octylate, manganese octylate, manganese naphthenate, iron naphthenate, cobalt stearate, and cobalt neodecanoate.

In terms of the ease of handling, the transition metal catalyst is preferably supported on a carrier. The type of the carrier is not particularly limited, and zeolite, diatomaceous earth, calcium silicates, and the like can be used. Particularly, an aggregate having a size of 0.1 to 200 µm during and after catalyst preparation is preferable because of good handling properties. Particularly, a carrier having a size of 10 to 100 nm when dispersed in a resin is preferable because it provides a transparent resin composition when dispersed into a resin. Example of such a carrier includes synthetic calcium silicate. From the view point of the oxygen absorption capability, physical strength, and economy, the blending ratio of the transition metal catalyst is preferably 0.001 to 10 wt%, particularly preferably 0.01 to 1 wt%, in terms of the weight of metal atoms in the oxygen-absorbing resin composition.

The initiator of the present invention is a substance that is excited by irradiation with 300 to 400 nm ultraviolet ray or by energy transferred from a sensitizer excited by irradiation with 300 to 400 nm ultraviolet ray and becomes a starting point for initiating the oxidation reaction of an oxidizable resin or an accelerant. In the present invention, a hydrogen abstraction type or intramolecular cleavage type initiator is used. With the hydrogen abstraction type initiator, an excited initiator molecule abstracts hydrogen from the oxidizable resin or the accelerant to produce an active radical, and thus initiates the oxidation reaction. Meanwhile, with the intramolecular cleavage type initiator, an excited initiator molecule is α-cleaved to produce a radical, and this radical further abstracts hydrogen from the oxidizable resin or the accelerant to produce an active radical, and thus, the oxidation reaction proceeds. Typical examples of the hydrogen abstraction type initiator include benzophenones, thiazines, metal porphyrins, anthraquinones, xanthones, thioxanthones, fluorenones, and benzoquinones. Fluorenones, thioxanthones, and anthraquinones are preferable. Typical examples of the intramolecular cleavage type initiator include α-hydroxy ketones (Irgacure 127, Irgacure 184, Irgacure 2959, and the like), benzyl ketals (Irgacure 651 and the like), acylphosphine oxides (Darocur TPO, Irgacure 819, and the like), and oxime esters (Irgacure OXE01, Irgacure OXE02, and the like). Among them, α-hydroxy ketones and acylphosphine oxides are preferable. The blending ratio of the initiator is preferably 0.001 to 10 wt%, particularly preferably 0.01 to 1 wt%, in the oxygen-absorbing resin composition. When the blending ratio of the initiator is within the above range, oxygen absorption can be more rapidly initiated than when the blending ratio of the initiator is outside the above range, and the amount of the initiator in the oxygen-absorbing resin composition can be a necessary and sufficient amount.

The ultraviolet ray for irradiation has a peak wavelength within the range of 300 to 400 nm, preferably within the range of 315 to 380 nm. A peak wavelength of less than 300 nm is not preferable because toxic ozone is generated. A peak wavelength of more than 400 nm is not preferable because oxygen absorption cannot be initiated.

The sensitizer of the present invention is a substance that causes photosensitization, and a molecule in an excited state produced by irradiation of an ultraviolet ray has a role in transferring excitation energy to another molecule without undergoing a chemical reaction and, as a result, causing the molecule to undergo a photochemical reaction, such as energy transfer, electron transfer, or a hydrogen abstraction reaction. In addition, the sensitizer of the present invention is selected from substances that absorb 300 to 400 nm ultraviolet ray to be in an excited singlet state, and undergo intersystem crossing to be in an excited triplet state. Typical examples of the sensitizer include benzophenones, thioxanthones, anthraquinones, and anthracenes, and thioxanthones are preferable. The blending ratio of the sensitizer is preferably 0.001 to 10 wt%, particularly preferably 0.01 to 1 wt%, in the oxygen-absorbing resin composition. The substances mentioned in the typical examples of the sensitizer also have a function as an initiator when used alone. But, considering the wavelength of an ultraviolet ray for irradiation, the maximum absorption wavelength, molar absorption coefficient, and excited triplet energy of the sensitizers, and the like, two or more substances can also be used in combination as a sensitizer and an initiator. When two or more substances are used in combination, a substance having higher excited triplet energy functions as a sensitizer, and the other substance functions as an initiator. In addition, it is preferable that the excited triplet energy of the sensitizer is higher than the excited triplet energy of the initiator by 10 to 15 kJ/mol. By suitably selecting a combination of a sensitizer and an initiator, oxygen absorption can be efficiently initiated. Particularly, a combination using an aromatic ketone for an initiator and a thioxanthones for a sensitizer is preferable. Here, it is more preferable that the aromatic ketone is a fluorenones. In this case, oxygen absorption can be much more efficiently initiated.

The accelerant of the present invention is a substance that efficiently initiates oxygen absorption by mixing it into the oxygen-absorbing resin composition. As the accelerant, a polymer containing a phenyl group is preferable. The polymer containing a phenyl group has a phenyl group, and its benzylic hydrogen is easily abstracted, and therefore, the polymer containing a phenyl group becomes a radical easily. Therefore, oxygen absorption is more rapidly initiated. Examples of the polymer containing a phenyl group include a copolymer containing a constituent unit corresponding to styrene. Typical examples of the copolymer containing a constituent unit corresponding to styrene include a hydrogenated styrene-butadiene rubber (HSBR), a styrene-ethylene butylene-styrene block copolymer (SEBS), a styrene-ethylene butylene-olefin crystal block copolymer (SEBC), a styrene-butadiene-styrene block copolymer (SBS), and a styrene-isoprene-styrene block copolymer (SIS). The blending ratio of the accelerant is preferably 1 to 50 wt%, particularly preferably 5 to 30 wt%, in the oxygen-absorbing resin composition. In this case, oxygen absorption can be more rapidly initiated than when the blending ratio of the accelerant is outside the above range.

The oxygen-absorbing resin composition of the present invention can be formed into a pellet-shaped, film-shaped, or sheet-shaped oxygen absorbent, by melt-kneading a resin composition comprising an oxidizable thermoplastic resin, a transition metal catalyst, and an initiator by using an extruder or the like. For its use form, it can be used as an oxygen scavenger processed into a pellet shape or a film shape or another small piece shape, or as an oxygen scavenger packaging body in a form in which the oxygen scavenger is placed in an air-permeable sachet. In addition, the above small piece can be molded in the form of a label, a card, packing, or the like and used as an oxygen scavenging body.

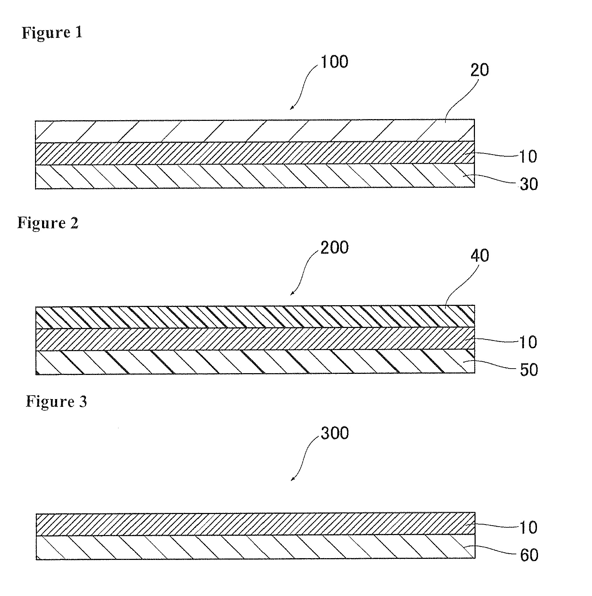

Further, the oxygen-absorbing resin composition of the present invention can be used for a part of or the whole of a packaging bag or a packaging container as an oxygen scavenging packaging material, as it is, or by laminating the oxygen-absorbing resin composition on a suitable packaging material. For example, as shown in Figure 1, it is possible to use the oxygen-absorbing resin composition of the present invention as an oxygen scavenging layer 10, laminate a thermoplastic resin having high oxygen permeability and also having heat sealability on one side of the oxygen scavenging layer 10 as an isolation layer 20 isolated from contents to be packaged, and laminate a resin having low oxygen permeability, a metal, or a metal oxide on the other side of the oxygen scavenging layer 10 as a gas barrier layer 30 to provide a film-shaped or sheet-shaped oxygen scavenging multilayer body 100. The thickness of the oxygen scavenging layer 10 included in the oxygen scavenging multilayer body 100 is preferably 300 µm or less, more preferably 10 to 200 µm.

The oxygen-absorbing resin composition of the present invention can be transparent. Therefore, the oxygen-absorbing resin composition of the present invention is preferable as a packaging material having transparency. Particularly, an oxygen scavenging multilayer body 200 comprising a polyolefin layer 40/an oxygen scavenging layer 10 containing the oxygen-absorbing resin composition of the present invention/a transparent gas barrier resin layer 50 as a basic structure, as shown in Figure 2, can be used as a transparent oxygen scavenging packaging material. Examples of the transparent gas barrier resin layer 50 includes a layer containing a polyester or a polyamide, nylon MXD6, an ethylene-vinyl alcohol copolymer, or vinylidene chloride, on which silica or alumina is vapor-deposited.

In addition, the above oxygen-absorbing resin composition can be mixed with one or more selected from a desiccant, an adsorbent, an antimicrobial agent, and a coloring agent to provide a composition having both an oxygen absorption function and other functions, such as a drying function. In addition, a multilayer body 300 comprising an oxygen scavenging layer 10 containing the oxygen-absorbing resin composition, and a layer 60 containing one or more selected from a desiccant, an adsorbent, an antimicrobial agent, and a coloring agent can also be provided.

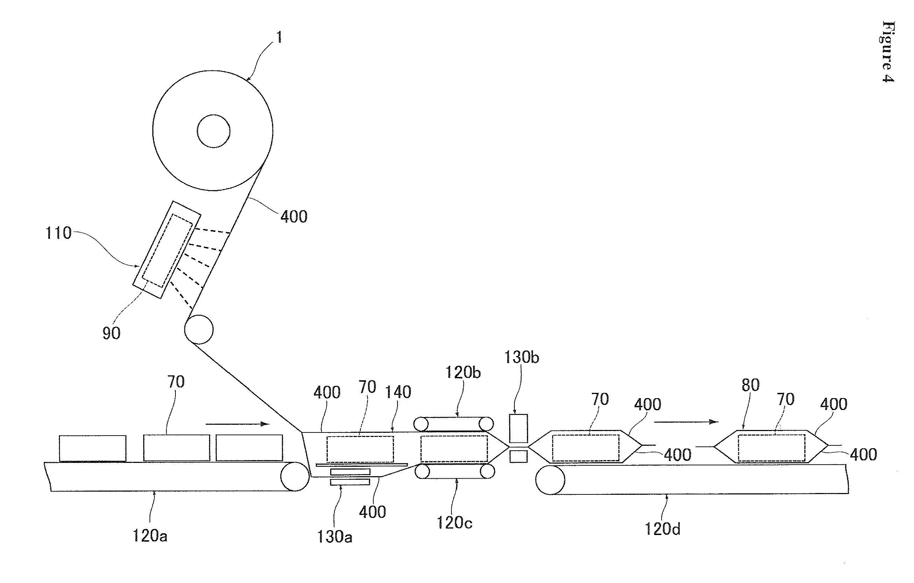

Next, the first embodiment of a method for manufacturing a packaging body according to the present invention will be described using Figure 4. Figure 4 is a schematic view showing one step in the first embodiment of the method for manufacturing a packaging body according to the present invention.
First, as shown in Figure 4, an oxygen scavenging sheet or film (hereinafter simply referred to as a "film") 400 wound around a roll 1 is unwound, and the film 400 is irradiated with an ultraviolet ray having a peak wavelength within the range of 300 to 400 nm by an ultraviolet irradiation apparatus 110 to initiate oxygen absorption in the oxygen-absorbing resin composition (ultraviolet irradiation step).

Next, using the film 400, an article to be packaged 70 is packaged, for example, by pillow packaging. Specifically, the article to be packaged 70 conveyed by a conveyance line 120a is surrounded by the film 400 irradiated with the ultraviolet ray. Thus, the article to be conveyed 70 is packaged (packaging step).

Examples of the article to be packaged 70 include those having a great need for storage and quality preservation, such as foods, drinks, medicines, medical supplies, cosmetics, metallic products, and electronic products. The film 400 comprises the oxygen scavenging layer containing the oxygen-absorbing resin composition described above.

Then, both edges of the film 400 are heat-sealed by a heat sealing apparatus 130a to form a cylindrical body 140. Then, this cylindrical body 140 is further conveyed by conveyance lines 120b and 120c, and sections of the cylindrical body 140 in front of and behind the article to be conveyed 70 are heat-sealed by a heat sealing apparatus 130b and then cut. Thus, a packaging body 80 is obtained. The obtained packaging body 80 is conveyed, for example, by a conveyance line 120d. Here, the packaging body 80 is usually a bag-shaped body. In addition, usually, the packaging body 80 is hermetically closed.

According to the above manufacturing method, since an ultraviolet ray having a peak wavelength within the range of 300 to 400 nm are irradiated to initiate oxygen absorption in the oxygen-absorbing resin composition, the generation of harmful ozone can be prevented. Therefore, the irradiation apparatus 110 does not require a local exhaust apparatus. In addition, in the irradiation apparatus 110, heat generation is small. Therefore, large cooling equipment is not required. As a result, the equipment for manufacturing the packaging body 80 can be miniaturized. In addition, oxygen absorption can be rapidly initiated by irradiation with an ultraviolet ray having a peak wavelength within the range of 300 to 400 nm.

Here, the ultraviolet irradiation apparatus 110 is not particularly limited as long as an ultraviolet ray having a peak wavelength within the range of 300 to 400 nm can be irradiated. The irradiation apparatus 110 is preferably an irradiation apparatus having an ultraviolet LED 90 as a light source for the following reason.

The ultraviolet LED 90 has the advantages of low power consumption, long life, small heat generation, small size, and narrow emission spectrum width (50 nm or less), compared with an ultraviolet lamp. In the irradiation apparatus 110 comprising, as a light source, an ultraviolet LED that emits 315 to 380 nm ultraviolet rays (UV-A light), toxic ozone is not generated. Therefore, the irradiation apparatus 110 having the ultraviolet LED 90 as a light source does not require a local exhaust apparatus. In addition, in the irradiation apparatus 110 having the ultraviolet LED 90 as a light source, heat generation is small. Therefore, the irradiation apparatus 110 does not require large cooling equipment. In addition, compared with an irradiation apparatus 110 using an ultraviolet lamp 90, the thickness of the ultraviolet irradiation portion can be reduced, and the distance between the film and the light source can be shortened. Therefore, the miniaturization of the irradiation apparatus 110 is possible. Further, in the irradiation apparatus 110 having the ultraviolet LED 90 as a light source, the maintenance cost can also be reduced in terms of low power consumption and long life. Further, in the irradiation apparatus 110, heat generation is smaller than in conventional ultraviolet lamps. Therefore, the temperature increase of the film 400 is sufficiently suppressed, and there is no possibility of damaging the article to be packaged 70.

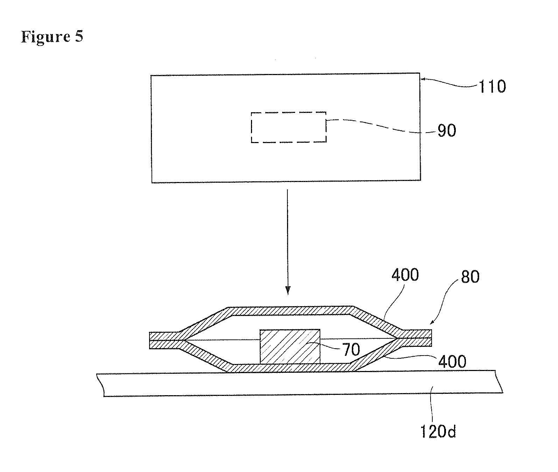

Next, the second embodiment of the method for manufacturing a packaging body according to the present invention will be described with reference to Figure 5. Figure 5 is a partial cross-sectional view showing one step in the second embodiment of the method for manufacturing a packaging body according to the present invention. In the description of this embodiment, components identical or equivalent to those in the first embodiment are referred to by identical numerals, and redundant description is omitted.
This embodiment is different from the manufacturing method in the first embodiment in that in Figure 4, after the article to be packaged 70 is packaged, the oxygen scavenging film 400 is irradiated with an ultraviolet ray having a peak wavelength within the range of 300 to 400 nm by using the irradiation apparatus 110, to initiate oxygen absorption to obtain the packaging body 80. In other words, in this embodiment, after being unwound from the roll 1, the film 400 before the article to be packaged 70 is packaged is not irradiated with an ultraviolet ray, and after the article to be packaged 70 is packaged in the film 400, the film 400 is irradiated with an ultraviolet ray on the conveyance line 120d in Figure 4 to initiate oxygen absorption, as shown in Figure 5.

Also according to the manufacturing method in this embodiment, as in the manufacturing method in the first embodiment, an ultraviolet ray having a peak wavelength within the range of 300 to 400 nm are irradiated to initiate oxygen absorption in the oxygen-absorbing resin composition, and therefore, the generation of harmful ozone can be prevented. Therefore, the irradiation apparatus 110 does not require a local exhaust apparatus. In addition, in the irradiation apparatus 110, heat generation is small. Therefore, large cooling equipment is not required. As a result, the equipment for manufacturing the packaging body 80 can be miniaturized. In addition, oxygen absorption can be rapidly initiated by irradiation with an ultraviolet ray having a peak wavelength within the range of 300 to 400 nm.
In this embodiment, after the article to be packaged 70 is packaged with the film 400 and the film 400 is heat-sealed, an ultraviolet ray may be irradiated. Alternatively, after the article to be packaged 70 is packaged with the film 400 and an ultraviolet ray is irradiated, the film 400 may be heat-sealed. In other words, the step of heat-sealing the film 400 may be conducted between the packaging step and the ultraviolet irradiation step, or after the ultraviolet irradiation step.

In the above first and second embodiments, an ultraviolet ray is preferably irradiated at an illuminance of 2 mW/cm² or more, more preferably at an illuminance of 10 mW/cm² or more. In this case, oxygen absorption can be rapidly initiated by shorter-time ultraviolet irradiation than when the illuminance is outside the above range. However, an ultraviolet ray is preferably irradiated at an illuminance of 10000 mW/cm² or less.

It is particularly effective to conduct such irradiation with high illuminance ultraviolet ray on an oxygen-absorbing resin composition comprising an initiator, a transition metal catalyst, an oxidizable resin, a photosensitizer, and an accelerant.

### Examples

The present invention will be described in more detail below using Examples and Comparative Examples, but the present invention is not limited to the following Examples.

### (Example 1)

An initiator composed of 9-fluorenone (hereinafter described as "FL"), cobalt octylate (cobalt content: 8% by weight, hereinafter described as "Co octylate"), and synthetic calcium silicate (hereinafter described as "MCE") were mixed at a mass ratio of 0.45:1.7:0.85 to obtain a powder. This powder and syndiotactic 1,2-polybutadiene (hereinafter described as "PBR"), which was an oxidizable thermoplastic resin, were mixed at a mass ratio or 3.0:100, and melt-kneaded by using a biaxial kneading extruder at 140°C to prepare an oxygen-absorbing resin composition (FL: 0.024 mmol/g). Then, a single-layer film having a thickness of 80 µm was formed by a hot press using the resultant oxygen-absorbing resin composition.

The oxygen absorption capability of the above single-layer film was evaluated as follows. First, the single-layer film was cut into the size of 50 mm x 60 mm, and irradiated with an ultraviolet ray from the ultraviolet irradiation portion (100 ultraviolet LEDs were arranged in 50 cm²) of an irradiation apparatus having ultraviolet LEDs (peak wavelength: 375 nm) as a light source (the distance between the film and the light source: 1 cm, illuminance: 30 mW/cm²). Each of the single-layer films irradiated with the ultraviolet ray for 10 seconds (irradiation amount: 300 mJ/cm²) and 60 seconds (irradiation amount: 1800 mJ/cm²) was sealed in an oxygen barrier bag composed of silica-vapor-deposited PET, with 240 mL of air, and allowed to stand under the conditions of 25°C and 60% RH, and the amount of oxygen absorbed after a lapse of 24 hours (hereinafter described as "the initial amount of oxygen absorbed") was measured. The initial amount of oxygen absorbed was 0 mL/g in the case of 10 second irradiation and 6 mL/g in the case of 60 second irradiation. The results are shown in Table 1.

### (Example 2)

An initiator composed of 2,4-diethylthioxanthene-9-one (hereinafter described as "DETX"), Co octylate, and MCE were mixed at a mass ratio of 0.45:1.7:0.85 to obtain a powder. This powder and the oxidizable thermoplastic resin in Example 1 were mixed at a mass ratio of 3.0:100, and a single-layer film composed of an oxygen-absorbing resin composition was prepared (DETX: 0.016 mmol/g) as in Example 1. The oxygen absorption capability of this single-layer film was evaluated as in Example 1. The results are shown in Table 1.

### (Example 3)

An initiator composed of 2-isopropylthioxanthone (hereinafter described as "ITX"), Co octylate, and MCE were mixed at a mass ratio of 0.45:1.7:0.85 to obtain a powder. This powder and the oxidizable thermoplastic resin in Example 1 were mixed at a mass ratio of 3.0:100, and a single-layer film composed of an oxygen-absorbing resin composition was prepared (ITX: 0.017 mmol/g) as in Example 1. The oxygen absorption capability of this single-layer film was evaluated as in Example 1. The results are shown in Table 1.

### (Example 4)

An initiator composed of FL, a sensitizer composed of DETX, Co octylate, and MCE were mixed at a mass ratio of 0.45:0.45:1.7:0.85 to obtain a powder. This powder and the oxidizable thermoplastic resin in Example 1 were mixed at a mass ratio of 3.45:100, and a single-layer film composed of an oxygen-absorbing resin composition was prepared (FL: 0.024 mmol/g, DETX: 0.016 mmol/g) as in Example 1. The oxygen absorption capability of this single-layer film was evaluated as in Example 1. The results are shown in Table 1.

### (Example 5)

An initiator composed of FL, a sensitizer composed of ITX, Co octylate, and MCE were mixed at a mass ratio of 0.45:0.45:1.7:0.85 to obtain a powder. This powder and the oxidizable thermoplastic resin in Example 1 were mixed at a mass ratio of 3.45:100, and a single-layer film composed of an oxygen-absorbing resin composition was prepared (FL: 0.024 mmol/g, ITX: 0.017 mmol/g) as in Example 1. The oxygen absorption capability of this single-layer film was evaluated as in Example 1. The results are shown in Table 1. Examples 4 and 5 showed that by simultaneously blending an initiator and a sensitizer, oxygen absorption capability was improved.

### (Example 6)

An initiator composed of FL, Co octylate, and MCE were mixed at a mass ratio of 0.45:1.7:0.85 to obtain a powder. This powder, the oxidizable thermoplastic resin in Example 1, and an accelerant composed of a styrene-butadiene-styrene block copolymer (hereinafter described as "SBS") were mixed at a mass ratio of 3.0:90:10, and a single-layer film composed of an oxygen-absorbing resin composition was prepared (FL: 0.024 mmol/g) as in Example 1. The oxygen absorption capability of this single-layer film was evaluated as in Example 1. The results are shown in Table 1.

### (Example 7)

An initiator composed of FL, Co octylate, and MCE were mixed at a mass ratio of 0.45:1.7:0.85 to obtain a powder. This powder, the oxidizable thermoplastic resin in Example 1, and an accelerant composed of a styrene-ethylene butylene-olefin crystal block copolymer (hereinafter described as "SEBC") were mixed at a mass ratio of 3.0:80:20, and a single-layer film composed of an oxygen-absorbing resin composition was prepared (FL: 0.024 mmol/g) as in Example 1. The oxygen absorption capability of this single-layer film was evaluated as in Example 1. The results are shown in Table 1.

### (Example 8)

An initiator composed of DETX, Co octylate, and MCE were mixed at a mass ratio of 0.45:1.7:0.85 to obtain a powder. This powder, the oxidizable thermoplastic resin in Example 1, and an accelerant composed of SEBC were mixed at a mass ratio of 3.0:80:20, and a single-layer film composed of an oxygen-absorbing resin composition was prepared (DETX: 0.016 mmol/g) as in Example 1. The oxygen absorption capability of this single-layer film was evaluated as in Example 1. The results are shown in Table 1.

### (Example 9)

An initiator composed of ITX, Co octylate, and MCE were mixed at a mass ratio of 0.45:1.7:0.85 to obtain a powder. This powder, the oxidizable thermoplastic resin in Example 1, and an accelerant composed of SEBC were mixed at a mass ratio of 3.0:80:20, and a single-layer film composed of an oxygen-absorbing resin composition was prepared (ITX: 0.017 mmol/g) as in Example 1. The oxygen absorption capability of this single-layer film was evaluated as in Example 1. The results are shown in Table 1. Examples 6 to 9 showed that by blending an accelerant, oxygen absorption capability was improved.

### (Example 10)

An initiator composed of FL, a sensitizer composed of DETX, Co octylate, and MCE were mixed at a mass ratio of 0.45:0.45:1.7:0.85 to obtain a powder. This powder, the oxidizable thermoplastic resin in Example 1, and an accelerant composed of SEBC were mixed at a mass ratio of 3.45:80:20, and a single-layer film composed of an oxygen-absorbing resin composition was prepared (FL: 0.024 mmol/g, DETX: 0.016 mmol/g) as in Example 1. The oxygen absorption capability of this single-layer film was evaluated as in Example 1. The results are shown in Table 1.

### (Example 11)

An initiator composed of FL, a sensitizer composed of ITX, Co octylate, and MCE were mixed at a mass ratio of 0.45:0.45:1.7:0.85 to obtain a powder. This powder, the oxidizable thermoplastic resin in Example 1, and an accelerant composed of SEBC were mixed at a mass ratio of 3.45:80:20, and a single-layer film composed of an oxygen-absorbing resin composition was prepared (FL: 0.024 mmol/g, ITX: 0.017 mmol/g) as in Example 1. The oxygen absorption capability of this single-layer film was evaluated as in Example 1. The results are shown in Table 1. Examples 10 and 11 showed that by simultaneously blending an initiator, a sensitizer, and an accelerant, oxygen absorption capability was further improved.

### (Comparative Example 1)

The oxidizable thermoplastic resin used in Example 1 was melt-kneaded by using a biaxial kneading extruder at 140°C to prepare a resin composition. Then, a single-layer film having a thickness of 80 µm was formed by a hot press using the resultant resin composition. The oxygen absorption capability of this single-layer film was evaluated as in Example 1, but oxygen absorption was not initiated even after a lapse of 10 days. The results are shown in Table 1.

### (Comparative Example 2)

Co octylate and MCE were mixed at a mass ratio of 1.7:0.85 to obtain a powder. This powder and the oxidizable thermoplastic resin in Example 1 were mixed at a mass ratio of 2.55:100, and a single-layer film composed of a resin composition was prepared as in Example 1. The oxygen absorption capability of this single-layer film was evaluated as in Example 1, but oxygen absorption was not initiated even after a lapse of 10 days. The results are shown in Table 1.

**[Table 1]**

| | Oxidizable resin | | Accelerant | | Initiator | | Sensitizer | | Initial amount of oxygen absorbed [mL/g] | |
|---|---|---|---|---|---|---|---|---|---|---|
| | Type | Amount [parts] | Type | Amount [parts] | Type | Amount [parts] | Type | Amount [parts] | 10s irradiation | 60s irradiation |
| Example 1 | PBR | 100 | - | - | FL | 0.45 | - | - | 0 | 6 |
| Example 2 | PBR | 100 | - | - | DETX | 0.45 | - | - | 0 | 9 |
| Example 3 | PBR | 100 | - | - | ITX | 0.45 | - | - | 0 | 7 |
| Example 4 | PBR | 100 | - | - | FL | 0.45 | DETX | 0.45 | 10 | 47 |
| Example 5 | PBR | 100 | - | - | FL | 0.45 | ITX | 0.45 | 0 | 41 |
| Example 6 | PBR | 90 | SBS | 10 | FL | 0.45 | - | - | 0 | 39 |
| Example 7 | PBR | 80 | SEBC | 20 | FL | 0.45 | - | - | 0 | 42 |
| Example 8 | PBR | 80 | SEBC | 20 | DETX | 0.45 | - | - | 5 | 27 |
| Example 9 | PBR | 80 | SEBC | 20 | ITX | 0.45 | - | - | 1 | 27 |
| Example 10 | PBR | 80 | SEBC | 20 | FL | 0.45 | DETX | 0.45 | 28 | 44 |
| Example 11 | PBR | 80 | SEBC | 20 | FL | 0.45 | ITX | 0.45 | 40 | 47 |
| Comparative Example 1 | PBR | 100 | - | - | - | - | - | - | 0 | 0 |
| Comparative Example 2 | PBR | 100 | - | - | - | - | - | - | 0 | 0 |

### (Example 12)

An initiator composed of FL, a sensitizer composed of DETX, Co octylate, and MCE were mixed at a mass ratio of 0.15:0.22:1.7:0.85 to obtain a powder. This powder, the oxidizable thermoplastic resin in Example 1, and an accelerant composed of SEBC were mixed at a mass ratio of 2.92:80:20, and a single-layer film composed of an oxygen-absorbing resin composition was prepared (FL: 0.008 mmol/g, DETX: 0.008 mmol/g) as in Example 1. The oxygen absorption capability of this single-layer film was evaluated as in Example 1. The results are shown in Table 2.

### (Example 13)

An initiator composed of FL, a sensitizer composed of ITX, Co octylate, and MCE were mixed at a mass ratio of 0.15:0.22:1.7:0.85 to obtain a powder. This powder, the oxidizable thermoplastic resin in Example 1, and an accelerant composed of SEBC were mixed at a mass ratio of 2.92:80:20, and a single-layer film composed of an oxygen-absorbing resin composition was prepared (FL: 0.008 mmol/g, ITX: 0.008 mmol/g) as in Example 1. The oxygen absorption capability of this single-layer film was evaluated as in Example 1. The results are shown in Table 2.

### (Example 14)

An initiator composed of FL, a sensitizer composed of ITX, Co octylate, and MCE were mixed at a mass ratio of 0.15:0.22:1.7:0.85 to obtain a powder. This powder, the oxidizable thermoplastic resin in Example 1, and an accelerant composed of SBS were mixed at a mass ratio of 2.92:90:10, and a single-layer film composed of an oxygen-absorbing resin composition was prepared (FL: 0.008 mmol/g, ITX: 0.008 mmol/g) as in Example 1. The oxygen absorption capability of this single-layer film was evaluated as in Example 1. The results are shown in Table 2.

As is also clear from Examples 12 to 14 in Table 2, in the oxygen-absorbing resin compositions obtained by simultaneously blending the initiator, the sensitizer, and the accelerant, oxygen absorption was initiated within 24 hours by 10 second ultraviolet irradiation even if the amount of the initiator and the sensitizer blended was reduced.

### (Example 15)

An initiator composed of benzophenone (described as "BP"), Co octylate, and MCE were mixed at a mass ratio of 0.89:1.7:0.85 to obtain a powder. This powder and the oxidizable thermoplastic resin in Example 1 were mixed at a mass ratio of 3.44:100, and a single-layer film composed of an oxygen-absorbing resin composition was prepared (BP: 0.047 mmol/g) as in Example 1. This single-layer film was irradiated with an ultraviolet ray from the irradiation apparatus described in Example 1 (the distance between the film and the light source: 1 cm, illuminance: 30 mW/cm²). Each of the films irradiated for 10 seconds (irradiation amount: 300 mJ/cm²), 60 seconds (irradiation amount: 1800 mJ/cm²), and 300 seconds (irradiation amount: 9000 mJ/cm²) was sealed in an oxygen barrier bag composed of silica-vapor-deposited PET, with 240 mL of air, and allowed to stand under the conditions of 25°C and 60% RH, and the initial amount of oxygen absorbed was measured. The results are shown in Table 2.

### (Example 16)

An initiator composed of 4-phenylbenzophenone (hereinafter described as "PBP"), Co octylate, and MCE were mixed at a mass ratio of 0.45:1.7:0.85 to obtain a powder. This powder and the oxidizable thermoplastic resin in Example 1 were mixed at a mass ratio of 3.0:100, and a single-layer film composed of an oxygen-absorbing resin composition was prepared (PBP: 0.017 mmol/g) as in Example 1. The oxygen absorption capability of this single-layer film was evaluated as in Example 15. The results are shown in Table 2.

### (Example 17)

An initiator composed of BP, a sensitizer composed of DETX, Co octylate, and MCE were mixed at a mass ratio of 0.45:0.45:1.7:0.85 to obtain a powder. This powder and the oxidizable thermoplastic resin in Example 1 were mixed at a mass ratio of 3.45:100, and a single-layer film composed of an oxygen-absorbing resin composition was prepared (BP: 0.024 mmol/g, DETX: 0.016 mmol/g) as in Example 1. The oxygen absorption capability of this single-layer film was evaluated as in Example 1. The results are shown in Table 2.

### (Example 18)

An initiator composed of PBP, a sensitizer composed of DETX, Co octylate, and MCE were mixed at a mass ratio of 0.45:0.45:1.7:0.85 to obtain a powder. This powder and the oxidizable thermoplastic resin in Example 1 were mixed at a mass ratio of 3.45:100, and a single-layer film composed of an oxygen-absorbing resin composition was prepared (PBP: 0.017 mmol/g, DETX: 0.016 mmol/g) as in Example 1. The oxygen absorption capability of this single-layer film was evaluated as in Example 1. The results are shown in Table 2.

### (Example 19)

An initiator composed of PBP, a sensitizer composed of DETX, Co octylate, and MCE were mixed at a mass ratio of 0.45:0.45:1:7:0.85 to obtain a powder. This powder, the oxidizable thermoplastic resin in Example 1, and an accelerant composed of SEBC were mixed at a mass ratio of 3.45:80:20, and a single-layer film composed of an oxygen-absorbing resin composition was prepared (PBP: 0.017 mmol/g, DETX: 0.016 mmol/g) as in Example 1. The oxygen absorption capability of this single-layer film was evaluated as in Example 1. The results are shown in Table 2.

### (Example 20)

An initiator composed of PBP, a sensitizer composed of ITX, Co octylate, and MCE were mixed at a mass ratio of 0.45:0.45:1.7:0.85 to obtain a powder. This powder, the oxidizable thermoplastic resin in Example 1, and an accelerant composed of SEBC were mixed at a mass ratio of 3.45:80:20, and a single-layer film composed of an oxygen-absorbing resin composition was prepared (PBP: 0.017 mmol/g, ITX: 0.017 mmol/g) as in Example 1. The oxygen absorption capability of this single-layer film was evaluated as in Example 1. The results are shown in Table 2.

### (Example 21)

An initiator composed of FL, a sensitizer composed of anthracene (hereinafter described as "ANT"), Co octylate, and MCE were mixed at a mass ratio of 0.45:0.45:1.7:0.85 to obtain a powder. This powder, the oxidizable thermoplastic resin in Example 1, and an accelerant composed of SEBC were mixed at a mass ratio of 3.45:80:20, and a single-layer film composed of an oxygen-absorbing resin composition was prepared (FL: 0.024 mmol/g, ANT: 0.024 mmol/g) as in Example 1. The oxygen absorption capability of this single-layer film was evaluated as in Example 1. The results are shown in Table 2.

### (Example 22)

An initiator composed of 2,3,5,6-tetrachloro-1,4-benzoquinone (hereinafter described as "TCBQ"), Co octylate, and MCE were mixed at a mass ratio of 0.45:1.7:0.85 to obtain a powder. This powder, the oxidizable thermoplastic resin in Example 1, and an accelerant composed of SEBC were mixed at a mass ratio of 3.0:80:20, and a single-layer film composed of an oxygen-absorbing resin composition was prepared (TCBQ: 0.018 mmol/g) as in Example 1. The oxygen absorption capability of this single-layer film was evaluated as in Example 1. The results are shown in Table 2.

### (Example 23)

An initiator composed of TCBQ, a sensitizer composed of ITX, Co octylate, and MCE were mixed at a mass ratio of 0.45:0.45:1.7:0.85 to obtain a powder. This powder, the oxidizable thermoplastic resin in Example 1, and an accelerant composed of SEBC were mixed at a mass ratio of 3.45:80:20, and a single-layer film composed of an oxygen-absorbing resin composition was prepared (TCBQ: 0.018 mmol/g, , ITX: 0.017 mmol/g) as in Example 1. The oxygen absorption capability of this single-layer film was evaluated as in Example 1. The results are shown in Table 2.

### (Example 24)

An initiator composed of Irgacure 2959 (manufactured by Ciba Specialty Chemicals, hereinafter described as "IRGA"), a sensitizer composed of ITX, Co octylate, and MCE were mixed at a mass ratio of 0.45:0.45:1.7:0.85 to obtain a powder. This powder, the oxidizable thermoplastic resin in Example 1, and an accelerant composed of SEBC were mixed at a mass ratio of 3.45:80:20, and a single-layer film composed of an oxygen-absorbing resin composition was prepared (IRGA: 0.019 mmol/g, , ITX: 0.017 mmol/g) as in Example 1. The oxygen absorption capability of this single-layer film was evaluated as in Example 1. The results are shown in Table 2.

**[Table 2]**

| | Oxidizable resin | | Accelerant | | Initiator | | Sensitizer | | Initial amount of oxygen absorbed [mL/g] | | |
|---|---|---|---|---|---|---|---|---|---|---|---|
| | Type | Amount [parts] | Type | Amount [parts] | Type | Amount [parts] | Type | Amount [parts] | 10s irradiation | 60s irradiation | 300s irradiation |
| Example 12 | PBR | 80 | SEBC | 20 | FL | 0.15 | DETX | 0.22 | 1 | 38 | - |
| Example 13 | PBR | 80 | SEBC | 20 | FL | 0.15 | ITX | 0.22 | 10 | 45 | - |
| Example 14 | PBR | 90 | SBS | 10 | FL | 0.15 | ITX | 0.22 | 15 | 54 | - |
| Example 15 | PBR | 100 | - | - | BP | 0.89 | - | - | 0 | 0 | 6 |
| Example 16 | PBR | 100 | - | - | PBP | 0.45 | - | - | 0 | 0 | 35 |
| Example 17 | PBR | 100 | - | - | BP | 0.45 | DETX | 0.45 | 1 | 36 | - |
| Example 18 | PBR | 100 | - | - | PBP | 0.45 | DETX | 0.45 | 5 | 37 | - |
| Example 19 | PBR | 80 | SEBC | 20 | PBP | 0.45 | DETX | 0.45 | 9 | 42 | - |
| Example 20 | PBR | 80 | SEBC | 20 | PBP | 0.45 | ITX | 0.45 | 15 | 43 | - |
| Example 21 | PBR | 80 | SEBC | 20 | FL | 0.45 | ANT | 0.45 | 11 | 40 | - |
| Example 22 | PBR | 80 | SEBC | 20 | TCBQ | 0.45 | - | - | 8 | 34 | - |
| Example 23 | PBR | 80 | SEBC | 20 | TCBQ | 0.45 | ITX | 0.45 | 17 | 41 | - |
| Example 24 | PBR | 80 | SEBC | 20 | IRGA | 0.45 | ITX | 0.45 | 0 | 25 | - |

### (Example 25)

An initiator composed of FL, a sensitizer composed of DETX, Co octylate, and MCE were mixed at a mass ratio of 0.29:0.45:1.7:0.85 to obtain a powder. This powder, the oxidizable thermoplastic resin in Example 1, and an accelerant composed of SEBC were mixed at a mass ratio of 3.29:80:20, and a single-layer film composed of an oxygen-absorbing resin composition was prepared (FL: 0.016 mmol/g, DETX: 0.016 mmol/g) as in Example 1. This single-layer film was cut into the size of 50 x 60 mm, and irradiated with an ultraviolet ray from the ultraviolet irradiation portion (165 ultraviolet LEDs were arranged in 50 cm²) of an irradiation apparatus having ultraviolet LEDs (peak wavelength: 375 nm) as a light source (the distance between the film and the light source: 1 cm, illuminance: 90 mW/cm²). The film irradiated with an ultraviolet ray for 1 second (irradiation amount: 90 mJ/cm²) was sealed in an oxygen barrier bag composed of silica-vapor-deposited PET, with 240 mL of air, and allowed to stand under the conditions of 25°C and 60% RH, and the initial amount of oxygen absorbed was measured. The result is shown in Table 3.

### (Example 26)

An initiator composed of FL, a sensitizer composed of ITX, Co octylate, and MCE were mixed at a mass ratio of 0.29:0.45:1.7:0.85 to obtain a powder. This powder, the oxidizable thermoplastic resin in Example 1, and an accelerant composed of SEBC were mixed at a mass ratio of 3.29:80:20, and a single-layer film composed of an oxygen-absorbing resin composition was prepared (FL: 0.016 mmol/g, ITX: 0.017 mmol/g) as in Example 1. The oxygen absorption capability of this single-layer film was evaluated as in Example 25. The result is shown in Table 3.

**[Table 3]**

| | Oxidizable resin | | Accelerant | | Initiator | | Sensitizer | | Initial amount of oxygen absorbed [mL/g] |
|---|---|---|---|---|---|---|---|---|---|
| | Type | Amount [parts] | Type | Amount [parts] | Type | Amount [parts] | Type | Amount [parts] | 1s irradiation |
| Example 25 | PBR | 80 | SEBC | 20 | FL | 0.29 | DETX | 0.45 | 43 |
| Example 26 | PBR | 80 | SEBC | 20 | FL | 0.29 | ITX | 0.45 | 33 |

As is also clear from Examples 25 and 26 in Table 3, when the oxygen-absorbing resin compositions comprising the initiator, the sensitizer, and the accelerant were irradiated with high illuminance ultraviolet ray, it was possible to initiate oxygen absorption with an irradiation time of only 1 second.

### Industrial Applicability

The intended use of the oxygen-absorbing resin composition of the present invention is not limited, and the oxygen-absorbing resin composition of the present invention can exhibit highly practical oxygen scavenging capability in the field of the storage and quality preservation of foods, drinks, medicines, medical supplies, cosmetics, metallic products, electronic products, and the like.

### Reference Signs List

- 1:: roll
- 10:: oxygen scavenging layer
- 20:: isolation layer
- 30:: gas barrier layer
- 40:: polyolefin layer
- 50:: transparent gas barrier resin layer
- 60:: a layer containing one or more selected from a desiccant, an adsorbent, an antimicrobial agent, and a coloring agent
- 70:: article to be packaged
- 80:: packaging body
- 90:: ultraviolet LED
- 100, 200, 300, and 400:: oxygen scavenging sheet or film
- 110:: irradiation apparatus
- 120a, 120b, 120c, and 120d:: conveyance line
- 130a and 130b:: heat sealing apparatus
- 140:: cylindrical body

## Claims

1. An oxygen-absorbing resin composition comprising an initiator, a transition metal catalyst, and an oxidizable resin,
wherein the oxygen-absorbing resin composition initiates oxygen absorption by irradiation of an ultraviolet ray having a peak wavelength within a range of 300 to 400 nm.

2. The oxygen-absorbing resin composition according to claim 1,
wherein the ultraviolet irradiation is conducted using an irradiation apparatus having an ultraviolet LED as a light source.

3. The oxygen-absorbing resin composition according to claim 1 or 2,
further comprising a sensitizer.

4. The oxygen-absorbing resin composition according to claim 3,
wherein the initiator is a substance that is excited by irradiation of 300 to 400 nm ultraviolet ray or by energy transferred from the sensitizer excited by irradiation of 300 to 400 nm ultraviolet ray and becomes a starting point for initiating an oxidation reaction of the oxidizable resin.

5. The oxygen-absorbing resin composition according to claim 4,
wherein the initiator is an aromatic ketone, and the sensitizer is a thioxanthones.

6. The oxygen-absorbing resin composition according to any one of claims 1 to 5,
further comprising an accelerant.

7. The oxygen-absorbing resin composition according to claim 6,
wherein the accelerant is a polymer containing a phenyl group.

8. The oxygen-absorbing resin composition according to claim 7,
wherein the polymer containing the phenyl group is a copolymer containing a constituent unit corresponding to styrene.

9. An oxygen scavenging sheet or film containing an oxygen scavenging layer which comprises the oxygen-absorbing resin composition according to any one of claims 1 to 8.

10. A method for manufacturing a packaging body for packaging an article to be packaged, comprising:
an ultraviolet irradiation step of irradiating the oxygen scavenging sheet or film according to claim 9 with an ultraviolet ray having a peak wavelength within a range of 300 to 400 nm to initiate oxygen absorption in the oxygen-absorbing resin composition; and
a packaging step of packaging the article to be packaged in the sheet or film.

11. The method for manufacturing the packaging body according to claim 10, wherein the ultraviolet irradiation step is conducted before the packaging step.

12. The method for manufacturing the packaging body according to claim 10 or 11,
wherein the ultraviolet irradiation step is conducted using an irradiation apparatus having an ultraviolet LED as a light source.

13. The method for manufacturing the packaging body according to any one of claims 10 to 12, wherein in the ultraviolet irradiation step, the sheet or film is irradiated with a ultraviolet ray having an illuminance of 2 mW/cm² or more.
